# EUROPÄISCHE PATENTSCHRIFT

(11) **EP 3 782 931 B1**
(45) Veröffentlichungstag und Bekanntmachung des Hinweises auf die Patenterteilung: **09.04.2025**
(21) Anmeldenummer: 19193380.3
(22) Anmeldetag: 23.08.2019
(51) Int. Cl.: B65G 1/04, B65G 59/06

(54) **STAPELLAGERANORDNUNG**
STACK STORAGE ASSEMBLY
DISPOSITIF DE STOCKAGE PAR EMPILEMENT

(43) Veröffentlichungstag der Anmeldung: 24.02.2021
(73) Patentinhaber: Jungheinrich Aktiengesellschaft, 22047 Hamburg (DE)
(72) Erfinder: Cavelius, Jörg, 61118 Bad Vilbel (DE); Becker, Michael, 63512 Hainburg (DE)
(74) Vertreter: Keil & Schaafhausen Patentanwälte PartGmbB

(56) Entgegenhaltungen:
- WO-A1-2010/097425
- WO-A1-96/31420
- DE-A1- 102013 009 340
- DE-U1- 29 521 393
- JP-A- S58 162 440
- NO-A1- 20 171 688

## Beschreibung

Die vorliegende Erfindung betrifft eine Stapellageranordnung, die ein Gestell mit mehreren Behälteraufnahmeräumen aufweist, die an ihrem unteren Ende jeweils eine Öffnung aufweisen, wobei an mindestens einer Öffnung eine Klinkenanordnung angeordnet ist, die mindestens eine Klinkeneinheit mit einer Halteklinke aufweist, die zwischen einer Sperrstellung und einer Freigabestellung bewegbar ist. Eine derartige Stapellageranordnung ist beispielsweise aus DE 10 2013 009 340 A1, JP S 58 162 440 A oder EP 2 982 624 B1 bekannt. JP S 58 162 440 A offenbart den Oberbegriff des Anspruchs 1.

In einer derartigen Stapellageranordnung können Behälter gelagert werden, die aufeinandergestapelt sind und somit Stapel bilden. Die Stapel können relativ dicht benachbart zueinander angeordnet werden, beispielsweise in Form einer Matrix mit Reihen und Spalten.

Prinzipiell kann man einen Behälter entweder von oben in den Stapel einbringen und ihn ebenfalls oben entnehmen, oder man kann ihn von unten in den Stapel einbringen und von unten entnehmen. In der vorliegenden Stapellageranordnung wird der Behälter von unten eingelagert und ebenfalls von unten entnommen.

Um dies bewerkstelligen zu können, ist unterhalb der Behälteraufnahmeräume ein Beschickungsraum vorgesehen, in dem sich ein Beschickungsfahrzeug bewegen kann. Das Beschickungsfahrzeug kann, wenn es beispielsweise außerhalb der Stapellageranordnung mit einem Behälter beladen wird, diesen zu einem vorbestimmten Stapel transportieren, den Behälter dort anheben, bis er an den untersten Behälter dieses Stapels zur Anlage kommt und dann den Behälter mit dem darauf ruhenden Stapel anheben. Dieses Anheben erfolgt solange, bis der neu einzulagernde Behälter an der Klinkenanordnung vorbeigelaufen ist. Die Klinkenanordnung kann dabei durch den einzulagernden Behälter geöffnet werden. Wenn der einzulagernde Behälter mit dem darauf ruhenden Stapel von weiteren Behältern wieder abgesenkt wird, dann rasten die Halteklinken an dem Behälter ein und halten den Behälter mit dem darauf ruhenden Stapel von anderen Behältern in dem gewünschten Abstand vom Fußboden oder einer anderen Aufstandsfläche, so dass der Beschickungsraum frei von Behältern gehalten werden kann.

Die Halteklinken bilden ein Ersatz- oder Wartungsteil. Gleichzeitig sind sie ein für die Funktion wesentliches Element. Dementsprechend ist es für einen wirtschaftlichen Betrieb der Stapellageranordnung wichtig, dass Wartungszeiten kurzgehalten werden können.

WO 2010/097425 A1 zeigt eine Vorrichtung zum Stapeln und/oder Entstapeln von Gegenständen. Bei den Gegenständen handelt es sich um Formkörper der Bauindustrie oder Formkörper der Metallindustrie, die auch in Tragkassetten aufgenommen werden können. Die Formkörper werden von einem Beschickungsfahrzeug in eine Lagerposition verbracht und dort durch einen freien Querschnitt eines Stapel- bzw. Entstapelraums angehoben, bis sie an einer Rückhaltevorrichtung vorbeigeführt worden sind. Die Rückhaltevorrichtung weist mehrere Tragelemente auf, die um eine Schwenkwelle schwenkbar in einem Schwenklager an einer Tragkonstruktion gelagert sind. Die Tragelemente sind jeweils mit einer Verstellvorrichtung verbunden, die sich außerhalb des freien Querschnitts befindet.

NO 2017 1688 A zeigt einen Behälterhalter, mit dem es möglich sein soll, unterschiedlich hohe Behälter mit ihren Öffnungen in gleicher Weise in Bezug zu einer Ein- oder Ausgabeöffnung einer Beschickungsstation zu halten. Hierzu ist in dem Behälterhalter eine Klinkenanordnung vorgesehen, die eine Klinke aufweist, die um eine Welle schwenkbar ist. Die Klinke ist mit einem Antriebshebel verbunden, der beim Einschieben eines Behälters in den Behälterhalter die Klinke verschwenkt. Die Klinke ist dabei in einer Halterung gelagert, die mit Schrauben an einer Seitenwand des Behälterhalters befestigt sind, die von außen durch die Seitenwand gesteckt sind.

Der Erfindung liegt die Aufgabe zugrunde, Zeiten für Wartung und Instandhaltung kurz zu halten.

Diese Aufgabe wird bei einer Stapellageranordnung der eingangs genannten Art durch die Merkmale des kennzeichnenden Teils des Anspruchs 1 gelöst.

Man benötigt also lediglich einen Zugang zu der Öffnung, wenn ein Austausch der Halteklinke erforderlich sein sollte. Es ist nicht erforderlich, größere Teile der Stapellageranordnung auszubauen. Jeder Behälteraufnahmeraum kann getrennt von anderen Behälteraufnahmeräumen gewartet und instand gehalten werden. Man verwendet hierbei eine Halteklinkeneinheit, bei der die Halteklinke in einem Trägerelement angeordnet ist. Diese Einheit kann in einem Schadens- oder Wartungsfall auf einfache Weise ausgewechselt werden. Ein derartiges Auswechseln kann in relativ kurzer Zeit erfolgen, so dass man die Wartung oder Instandhaltung der Stapellageranordnung jedenfalls in diesem Bereich relativ schnell durchführen kann.

Die Öffnung weist zwei Längsseiten und zwei Querseiten auf und die Halteklinke ist um eine Achse verschwenkbar, die sowohl mit einer Längsseite als auch mit einer Querseite einen Winkel von weniger als 90° einschließt. Vorzugsweise schließt die Achse mit beiden Seiten, also mit der Längsseite und der Querseite, jeweils einen Winkel von etwa 45° ein. Die Halteklinke wirkt also von einer Ecke aus in die Öffnung hinein. Wenn ein Behälter durch die Öffnung in den Behälteraufnahmeraum verbracht wird, dann wirkt die Halteklinke auf eine Ecke des Behälters. In der Ecke hat ein Behälter normalerweise die höchste Stabilität. Dementsprechend wird die Belastbarkeit des Behälters groß gemacht, so dass man über dem untersten Behälter eine größere Menge von weiteren Behältern stapeln kann.

Vorzugsweise ist die Achse an zwei senkrecht zur Achse verlaufenden Stützflanschen gelagert. Dies erleichtert die Herstellung des Trägerelements. Man kann die Stützflansche von Bereichen entkoppeln, mit denen das Trägerelement im Gestell befestigt wird.

Vorzugsweise ist die Öffnung in einem Rahmen ausgebildet, der einen Teil des Gestells bildet, wobei das Trägerelement in einer Ausnehmung im Rahmen angeordnet ist. Das Trägerelement kann sich dann im Rahmen abstützen, was eine hohe mechanische Stabilität ergibt. Darüber hinaus spart man Bauraum, weil das Trägerelement zumindest teilweise im Rahmen versenkt werden kann.

Vorzugweise ist die Ausnehmung als Durchgangsöffnung ausgebildet. Damit kann das Trägerelement weitgehend in der Ausnehmung verschwinden, ohne dass der Rahmen mit einer übermäßig dicken Wandstärke ausgebildet sein muss.

In einer bevorzugten Ausgestaltung ist das Trägerelement als Winkelelement ausgebildet, das einen ersten Schenkel, der parallel zu einer Seite der Öffnung ausgerichtet ist, und einen zweiten Schenkel, der parallel zu einer an die Seite anschließenden anderen Seite ausgerichtet ist, aufweist. Damit kann man das Trägerelement in der Ecke der Öffnung anordnen und die beiden Schenkel parallel zum Rand der Öffnung montieren.

Erfindungsgemäß ist das Trägerelement vom Inneren der Offnung aus zugänglich. Wenn eine Reparatur erforderlich ist, kann das Trägerelement einfach von der Innenseite der Öffnung aus entnommen und ein anderes Trägerelement mit daran befestigter Halteklinke eingesetzt werden. Dies erleichtert die Reparatur.

Vorzugsweise ist das Trägerelement mit einer Innenseite der Öffnung verbunden. Man kann diese Verbindung von der Innenseite der Öffnung aus lösen, so dass lediglich Arbeiten unterhalb eines einzigen Behälteraufnahmeraums erforderlich sind. Ein Eingriff von Bereichen unterhalb von anderen Behälteraufnahmeräumen ist jedoch nicht notwendig.

Vorzugsweise ist die Halteklinke als zweiarmiger Hebel ausgebildet mit einem ersten Arm, der in die Öffnung gerichtet ist, und einem zweiten Arm, der von der Öffnung weg gerichtet ist, wobei beim Trägerelement ein Anschlag vorgesehen ist, an dem der zweite Arm anschlägt, wenn der erste Arm einen Winkel im Bereich von minus 15° bis plus 15° mit der Horizontalen einschließt. Der erste Arm kann also relativ weit in die Öffnung hineinragen, um einen Behälter zu halten. Der zweite Arm erstreckt sich vorzugsweise gradlinig zum ersten Arm, was die Herstellung der Halteklinke erleichtert.

Vorzugsweise ist der Anschlag durch einen Wandabschnitt des Trägerelements gebildet. Ein zusätzliches Element ist nicht erforderlich, was die Herstellung kostengünstig macht.

Vorzugsweise ist die Halteklinke mit einer Drehfederanordnung verbunden, die den zweiten Arm der Halteklinke mit einer Kraft in Richtung des Anschlags beaufschlagt. Damit wird sichergestellt, dass die Halteklinke, wenn keine anderen Kräfte vorhanden sind, immer in eine Halteposition verschwenkt ist, in der sie einen Behälter abstützen kann.

Vorzugsweise weist die Halteklinke einen Teil einer Sensoranordnung auf, mit der eine Stellung der Halteklinke erfassbar ist. Man kann dann auf relativ einfache Weise feststellen, ob sich die Halteklinke in der Halte- oder Sperrposition befindet, in der sie einen Behälter dagegen sichert, sich weiter nach unten zu bewegen. Sollte die Sensoranordnung feststellen, dass dies nicht der Fall ist, dann kann man beispielsweise ein weiteres Absenken eines Behälters unterbinden, um eine gefährliche Situation zu vermeiden.

Vorzugsweise ist der Teil der Sensoranordnung als Reflektor ausgebildet. Ein Teil der Sensoranordnung kann dann beispielsweise einen Lichtstrahl in den Bereich richten, in dem der Reflektor angeordnet ist, wenn sich die Halteklinke in der Halte- oder Sperrposition befindet. Der Reflektor reflektiert den Lichtstrahl dann zurück zu dem Empfänger. Wenn der Empfänger den reflektierten Lichtstrahl erfasst, kann die Sensoranordnung feststellen, dass die Halteklinke in die Halte- oder Sperrposition verschwenkt worden ist. Wenn der Empfänger den Lichtstrahl nicht erfasst, ist dies ein Zeichen dafür, dass die Halteklinke sich nicht in der gewünschten Position befindet.

Vorzugsweise ist das Trägerelement als Gussteil ausgebildet. Ein Gussteil lässt sich kostengünstig herstellen und hat gleichzeitig die erforderliche mechanische Stabilität.

Die Erfindung wird im Folgenden anhand eines bevorzugten Ausführungsbeispiels in Verbindung mit der Zeichnung beschrieben. Hierin zeigen:
- Fig. 1: eine schematische Darstellung einer Stapellageranordnung,
- Fig. 2: einen Ausschnitt aus einem Rahmen,
- Fig. 3: einen Ausschnitt aus der Stapellageranordnung mit einer Klinkeneinheit,
- Fig. 4: die Klinkeneinheit mit Halteklinke in Halte- oder Sperrposition,
- Fig. 5: die Klinkeneinheit mit Halteklinke in Freigabeposition und
- Fig. 6: die Klinkeneinheit in Draufsicht.

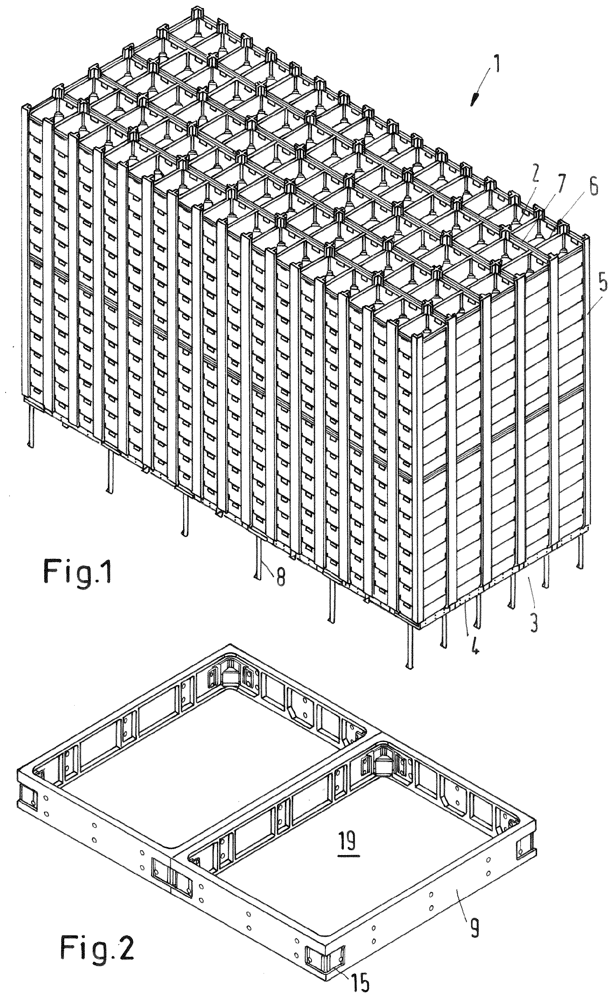

Fig. 1 zeigt in schematischer Darstellung ein Stapellager 1, in dem eine Vielzahl von Behältern 2 angeordnet ist. Die Behälter 2 sind in Stapeln in Form einer Matrix mit Reihen und Spalten angeordnet. Im vorliegenden Ausführungsbeispiel sind fünf Stapel nebeneinander und sechzehn Stapel hintereinander angeordnet. Unter den Stapeln der Behälter 2 ist ein Beschickungsraum 3 angeordnet, durch den Behälter in die Stapellageranordnung 1 eingelagert und aus der Stapellageranordnung 1 entnommen werden können.

Die Behälter 2 sind in Behälteraufnahmeräumen angeordnet. Zwischen dem Beschickungsraum 3 und den Behälteraufnahmeräumen ist ein Rahmen 4 angeordnet. Der Rahmen 4 bildet einen Teil eines Gestells. Das Gestell weist weiterhin Ständer 5 auf, die durch Querstreben 6 und Längsstreben 7 miteinander verbunden sein können. Der Rahmen 4 ist über Stützen 8 am Fußboden oder einer anderen Aufstandsfläche abgestützt.

Der Rahmen 4 ist im vorliegenden Fall aus einer Vielzahl von Modulen 9 zusammengesetzt, die in Längsrichtung und in Querrichtung der Stapellageranordnung 1 miteinander verbunden werden können, beispielsweise durch Schrauben oder Nieten. Jedes Modul bildet eine Öffnung 19, durch die ein Behälter 2 in einen Behälteraufnahmeraum eingebracht oder aus dem Behälteraufnahmeraum entnommen werden kann.

Fig. 2 zeigt zwei derartige Module 9, von denen jeder eine Öffnung 19 aufweist. Es ist aber auch möglich, Module zu verwenden, die mehr als eine Öffnung 19 aufweisen. So sind beispielsweise Module mit zwei, drei, vier oder fünf Öffnungen möglich. Die Module 9 sind vorzugsweise als Gussteile ausgebildet.

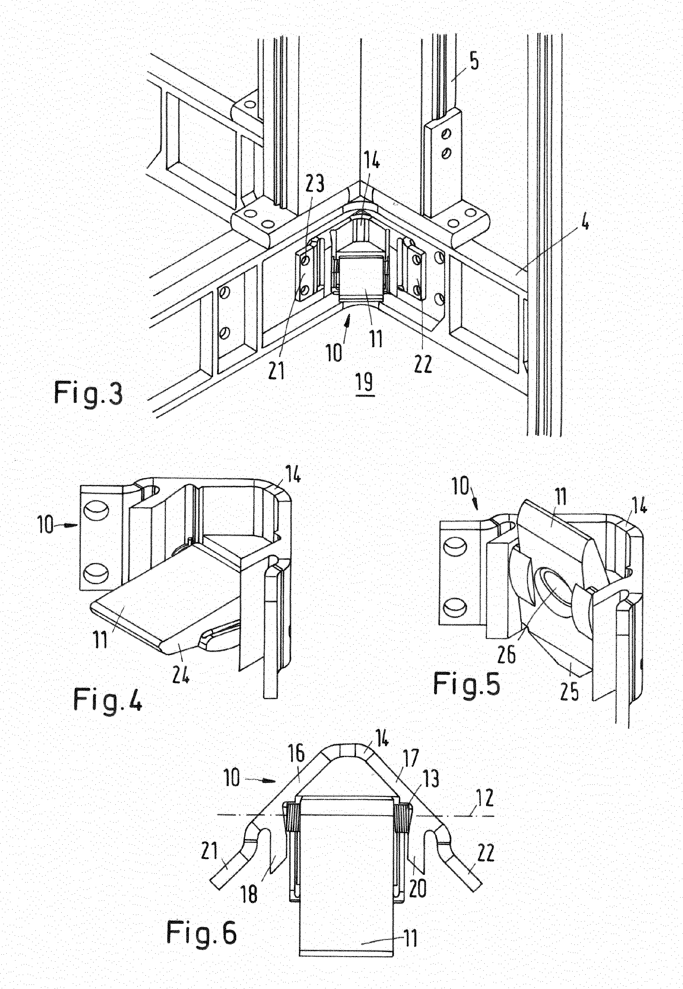

Fig. 3 zeigt einen Teil eines Moduls 9 mit darauf befindlichen Ständern 5. Weiterhin zeigt Fig. 3 eine Klinkeneinheit 10, die in den Fig. 4 bis 6 vergrößert dargestellt ist.

Die Klinkeneinheit 10 weist eine Halteklinke 11 auf, die zwischen einer in Fig. 4 dargestellten Sperrstellung und einer in Fig. 5 dargestellten Freigabestellung bewegbar ist. Die Bewegung der Halteklinke 11 erfolgt durch Verschwenken um eine Achse 12, die in Fig. 6 gestrichelt eingezeichnet ist. Zwei Federn 13, vorzugsweise Dreh- oder Torsionsfedern, sind vorgesehen, um die Halteklinke 11 mit einer Kraft oder einem Moment in Richtung auf die Sperrstellung zu belasten. Bevorzugterweise ist der Schwerpunkt der Halteklinke 11 so angeordnet, dass eine Bewegung in die Sperrstellung mittels Schwerkraft automatisch erfolgt.

Die Klinkeneinheit weist ein Trägerelement 14 auf, an dem die Halteklinke 11 verschwenkbar angeordnet ist. Das Trägerelement 14 ist lösbar im Gestell, genauer gesagt im Rahmen angeordnet und zwar an der Innenseite der Öffnung 19. Das Trägerelement 14 und damit die Klinkeneinheit 10 kann also von der Innenseite der Öffnung 19 her montiert oder ausgetauscht werden.

Das Trägerelement 14 ist in einer Ausnehmung 15 im Rahmen montiert. Die Ausnehmung 15 ist als Durchgangsöffnung in dem Rahmen ausgebildet. Wie man in Fig. 2 erkennen kann, ist die Ausnehmung 15 als Durchgangsöffnung in dem Modul 9 ausgebildet. Das Trägerelement 14 kann damit weitgehend im Rahmen, im vorliegenden Fall im Modul 9, versenkt werden und ragt nur geringfügig aus dem Rahmen heraus.

Wie man insbesondere in den Fig. 4 bis 6 erkennen kann, ist das Trägerelement 14 als Winkelelement ausgebildet, das zwei Schenkel aufweist, nämlich einen ersten Schenkel 16, der parallel zu einer Seite der Öffnung 19 ausgerichtet ist, und einen zweiten Schenkel 17, der parallel zu einer an diese Seite anschließenden anderen Seite der Öffnung 19 ausgerichtet ist. Die beiden Schenkel 16, 17 schließen einen Winkel von etwa 90° ein.

Von den Schenkeln 16, 17 ragen zwei Stützflansche 18, 20 in die Öffnung 19 vor. Die Stützflansche 18, 20 verlaufen im Wesentlichen parallel zur Längserstreckung der Halteklinke 11. Die Halteklinke 11 ist in den Stützflanschen 18, 20 verschwenkbar gelagert. Die Stützflansche 18, 20 verlaufen senkrecht zur Achse 12.

Der erste Schenkel 16 weist einen ersten Befestigungsbereich 21 auf und der zweite Schenkel 17 weist einen zweiten Befestigungsbereich 22 auf. Die Befestigungsbereiche 21, 22 liegen von innen am Rahmen, im vorliegenden Fall am Modul 9, an. Die Befestigungsbereiche 21, 22 weisen Bohrungen 23 auf, durch die Schraubbolzen geführt werden können, um das Trägerelement 14 am Rahmen zu befestigen. Damit wird das Trägerelement mit der Innenseite der Öffnung 19 verbunden.

Die Halteklinke 11 ist als zweiarmiger Hebel ausgebildet mit einem ersten Arm 24, der in die Öffnung 19 gerichtet ist, und einem zweiten Arm 25, der von der Öffnung 19 weggerichtet ist. Am Trägerelement 14 ist ein Anschlag vorgesehen, an dem der zweite Arm 25 anschlägt, wenn der erste Arm 24, genauer gesagt die in Schwerkraftrichtung obere Seite des ersten Arms 24, einen Winkel im Bereich von minus 15° bis plus 15° mit der Horizontalen einschließt. Damit erreicht man, dass die Halteklinke in der Sperr- oder Halteposition (Fig. 4) möglichst weit in die Öffnung 19 hineinragt und ein Behälter 2, der von den Halteklinken 11 in den vier Ecken der Öffnung 19 gehalten wird, unabhängig von seiner genauen Ausrichtung in der Öffnung 19 zuverlässig gehalten werden kann.

Der Anschlag wird durch das Trägerelement 14 gebildet, das zu diesem Zweck an seiner Unterseite eine nicht näher dargestellte Aussparung aufweisen kann.

An der Unterseite des ersten Arms 24 ist ein Reflektor 26 angeordnet. Der Reflektor 26 bildet einen Teil einer im Übrigen nicht näher dargestellten Sensoranordnung, mit der eine Stellung der Halteklinke 11 erfassbar ist. Man kann die Sensoranordnung beispielsweise mit einer Lichtquelle versehen, deren Strahl nach oben gerichtet ist. Wenn sich die Halteklinke 11 in der Sperrposition befindet, wird dann Licht wieder zurück in die Nähe der Lichtquelle reflektiert und kann dort erfasst werden. Wenn dies der Fall ist, ist dies ein Zeichen dafür, dass sich die Halteklinke 11 in der Sperrposition befindet. Wenn dies nicht der Fall ist, deutet dies daraufhin, dass sich die Halteklinke 11 nicht in der Sperrposition befindet und dementsprechend einen Behälter nicht zuverlässig halten kann. In diesem Fall kann die Sensoranordnung ein entsprechendes Signal an eine Steuereinrichtung übermitteln, die dann zum einen eine Störmeldung oder Fehlermeldung auslöst und zum anderen verhindert, dass sich ein Behälter oder ein Behälterstapel weiter absenkt.

Der übrige Teil der Sensoranordnung kann in dem Gestell angeordnet sein. Es ist aber auch möglich, weitere Elemente der Sensoranordnung an einem Beschickungsfahrzeug anzuordnen, mit dem ein Behälter in die Stapellageranordnung eingefahren oder aus der Stapellageranordnung entnommen werden kann.

Das Trägerelement 14 ist vorzugsweise als Gussteil ausgebildet. Es lässt sich kostengünstig herstellen und benötigt nur einen geringen Aufwand bei der Nachbearbeitung.

Der Behälter muss nicht unbedingt allseitig geschlossen sein. Er kann auch Öffnungen aufweisen, solange er stapelbar ist.

## Patentansprüche

1. Stapellageranordnung (1), die ein Gestell (4, 5, 6, 7, 8) mit mehreren Behälteraufnahmeräumen aufweist, die an ihrem unteren Ende jeweils eine Öffnung (19) aufweisen, wobei an mindestens einer Öffnung (19) eine Klinkenanordnung angeordnet ist, die mindestens eine Klinkeneinheit (10) mit einer Halteklinke (11) aufweist, die zwischen einer Sperrstellung und einer Freigabestellung bewegbar ist, wobei die Halteklinke (11) von der Innenseite der Öffnung her austauschbar ist, wobei die Klinkeneinheit (10), bei der die Halteklinke (11) schwenkbar in einem Trägerelement (14) angeordnet ist, lösbar im Gestell (4, 5, 6, 7, 8) befestigt ist, wobei die Klinkeneinheit (10) und das Trägerelement (14) von der Innenseite der Öffnung (19) her montierbar oder austauschbar sind, indem das Trägerelement (14) von der Innenseite der Öffnung aus entnommen und ein anderes Trägerelement (14) mit daran befestigter Halteklinke (11) eingesetzt wird, **dadurch gekennzeichnet, dass** die Öffnung (19) zwei Längsseiten und zwei Querseiten aufweist und die Halteklinke (11) um eine Achse (12) verschwenkbar ist, die sowohl mit einer Längsseite als auch mit einer Querseite einen Winkel von weniger als 90° einschließt.

2. Stapellageranordnung nach Anspruch 1, **dadurch gekennzeichnet, dass** die Achse (12) an zwei senkrecht zur Achse (12) verlaufenden Stützflanschen (18, 20) gelagert ist.

3. Stapellageranordnung nach Anspruch 1 oder 2, **dadurch gekennzeichnet, dass** die Öffnung (19) in einem Rahmen (4) ausgebildet ist, der einen Teil des Gestells (4, 5, 6, 7, 8) bildet, wobei das Trägerelement (14) in einer Ausnehmung (15) im Rahmen (4) angeordnet ist.

4. Stapellageranordnung nach Anspruch 3, **dadurch gekennzeichnet, dass** die Ausnehmung (15) als Durchgangsöffnung ausgebildet ist.

5. Stapellageranordnung nach Anspruch 3 oder 4, **dadurch gekennzeichnet, dass** das Trägerelement (14) als Winkelelement ausgebildet ist, das einen ersten Schenkel (16), der parallel zu einer Seite der Öffnung (19) ausgerichtet ist, und einen zweiten Schenkel (17), der parallel zu einer an die Seite anschließenden anderen Seite der Öffnung (19) ausgerichtet ist, aufweist.

6. Stapellageranordnung nach einem der Ansprüche 1 bis 5, **dadurch gekennzeichnet, dass** das Trägerelement (14) mit einer Innenseite der Öffnung (19) verbunden ist.

7. Stapellageranordnung nach einem der Ansprüche 1 bis 6, **dadurch gekennzeichnet, dass** die Halteklinke (11) als zweiarmiger Hebel ausgebildet ist mit einem ersten Arm (24), der in die Öffnung (19) gerichtet ist, und einem zweiten Arm (25), der von der Öffnung (19) weg gerichtet ist, wobei am Trägerelement (14) ein Anschlag vorgesehen ist, an dem der zweite Arm (25) anschlägt, wenn der erste Arm (24) einen Winkel im Bereich von -15° bis +15° mit der Horizontalen einschließt.

8. Stapellageranordnung nach Anspruch 7, **dadurch gekennzeichnet, dass** der Anschlag durch einen Wandabschnitt des Trägerelements (14) gebildet ist.

9. Stapellageranordnung nach Anspruch 7 oder 8, **dadurch gekennzeichnet, dass** die Halteklinke (11) mit einer Drehfederanordnung (13) verbunden ist, die den zweiten Arm (25) der Halteklinke (11) mit einer Kraft in Richtung des Anschlags beaufschlagt.

## Claims

1. Stacking storage arrangement (1) comprising a frame (4, 5, 6, 7, 8) with a plurality of container receiving spaces, which each have an opening (19) at their lower end, wherein a latch arrangement is arranged at at least one opening (19) and which has at least one latch unit (10) with a holding latch (11) that can be moved between a locking position and a release position, wherein the holding latch (11) can be replaced from the inside of the opening, wherein the latch unit (10), in which the holding latch (11) is pivotally arranged in a carrier element (14), is detachably mounted in the frame (4, 5, 6, 7, 8), the latch unit (10) and the carrier element (14) being mountable or replaceable from the inside of the opening (19) by removing the carrier element (14) from the inside of the opening and inserting another carrier element (14) with a holding latch (11) attached to it, **characterized in that** the opening (19) has two longitudinal sides and two transverse sides and the holding latch (11) can be pivoted about an axis (12) which encloses an angle of less than 90° with both a longitudinal side and a transverse side.

2. Stacking storage arrangement according to claim 1, **characterized in that** the axis (12) is mounted on two supporting flanges (18, 20) running perpendicularly to the axis (12).

3. Stacking storage arrangement according to claim 1 or 2, **characterized in that** the opening (19) is formed in a frame (4) which forms part of the frame (4, 5, 6, 7, 8), the carrier element (14) being arranged in a recess (15) in the frame (4).

4. Stacking storage arrangement according to claim 3, **characterized in that** the recess (15) is designed as a through-opening.

5. Stacking storage arrangement according to claim 3 or 4, **characterized in that** the carrier element (14) is formed as an angle element having a first leg (16) oriented parallel to one side of the opening (19) and a second leg (17) oriented parallel to another side of the opening (19) adjacent to said one side.

6. Stacking storage arrangement according to one of claims 1 to 5, **characterized in that** the carrier element (14) is connected to an inside of the opening (19).

7. Stacking storage arrangement according to one of claims 1 to 6, **characterized in that** the holding latch (11) is configured as a two-armed lever having a first arm (24) which is directed into the opening (19), and a second arm (25) which is directed away from the opening (19), a stop being provided on the carrier element (14), against which the second arm (25) strikes when the first arm (24) forms an angle in the range from -15° to +15° with the horizontal.

8. Stacking storage arrangement according to claim 7, **characterized in that** the stop is formed by a wall section of the carrier element (14).

9. Stacking storage arrangement according to claim 7 or 8, **characterized in that** the holding latch (11) is connected to a rotational spring arrangement (13) which acts upon the second arm (25) of the holding latch (11) with a force in the direction of the stop.

## Revendications

1. Système d'entreposage par empilement (1), qui comporte un châssis (4, 5, 6, 7, 8) avec plusieurs compartiments de réception de conteneurs, qui comportent respectivement une ouverture (19) à leur extrémité inférieure, sachant que sur au moins une ouverture (19) est disposé un agencement de loquet, qui comporte au moins une unité de loquet (10) avec un loquet de maintien (11), qui peut être déplacé entre une position de blocage et une position de libération, sachant que le loquet de maintien (11) peut être échangé depuis le côté intérieur de l'ouverture, sachant que l'unité de loquet (10) pour laquelle le loquet de maintien (11) est disposé pouvant pivoter dans un élément de support (14), est fixé de façon amovible dans le châssis (4, 5, 6, 7, 8), sachant que l'unité de loquet (10) et l'élément de support (14) peuvent être montés ou échangés depuis le côté intérieur de l'ouverture (19), l'élément de support (14) étant enlevé du côté intérieur de l'ouverture et un autre élément de support (14) inséré avec un loquet de maintien (11) fixé dessus, **caractérisé en ce que** l'ouverture (19) comporte deux côtés longitudinaux et deux côtés transversaux et le loquet de maintien (11) peut pivoter autour d'un axe (12), qui forme un angle inférieur à 90° tant avec un côté longitudinal qu'avec un côté transversal.

2. Système d'entreposage par empilement selon la revendication 1, **caractérisé en ce que** l'axe (12) est logé sur deux brides de support (18, 20) passant perpendiculairement à l'axe (12).

3. Système d'entreposage par empilement selon la revendication 1 ou 2, **caractérisé en ce que** l'ouverture (19) est constituée dans un cadre (4), qui forme une partie du châssis (4, 5, 6, 7, 8), sachant que l'élément de support (14) est disposé dans un évidement (15) dans le cadre (4).

4. Système d'entreposage par empilement selon la revendication 3, **caractérisé en ce que** l'évidement (15) est constitué sous la forme d'une ouverture de passage.

5. Système d'entreposage par empilement selon la revendication 3 ou 4, **caractérisé en ce que** l'élément de support (14) est constitué sous la forme d'un élément d'angle, qui comporte une première branche (16), qui est orientée parallèlement à un côté de l'ouverture (19) et une deuxième branche (17), qui est orientée parallèlement à un autre côté de l'ouverture (19) se raccordant au côté.

6. Système d'entreposage par empilement selon l'une quelconque des revendications 1 à 5, **caractérisé en ce que** l'élément de support (14) est relié à un côté intérieur de l'ouverture (19).

7. Système d'entreposage par empilement selon l'une quelconque des revendications 1 à 6, **caractérisé en ce que** le loquet de maintien (11) est constitué sous la forme d'un levier à deux bras avec un premier bras (24), qui est dirigé dans l'ouverture (19) et un deuxième bras (25), qui est dirigé éloigné de l'ouverture (19), sachant qu'une butée est prévue sur l'élément de support (14), sur laquelle vient buter le deuxième bras (25), lorsque le premier bras (24) forme avec l'horizontale un angle se situant dans une plage de -15° à +15°.

8. Système d'entreposage par empilement selon la revendication 7, **caractérisé en ce que** la butée est formée par une section de paroi de l'élément de support (14).

9. Système d'entreposage par empilement selon la revendication 7 ou 8, **caractérisé en ce que** le loquet de maintien (11) est relié à un système de ressort de torsion (13), qui applique une force en direction de la butée aux deux bras (25) du loquet de maintien (11).
